# EUROPÄISCHE PATENTSCHRIFT

(11) **EP 2 177 561 B1**
(45) Veröffentlichungstag und Bekanntmachung des Hinweises auf die Patenterteilung: **22.11.2017**
(21) Anmeldenummer: 08018119.1
(22) Anmeldetag: 16.10.2008
(51) Int. Cl.: C08L 1/28, C08B 11/20, C08J 3/00

(54) **Verweilen und Verteilen eines Aufgabegutes**
Storing and distributing a feeder product
Arrêt et distribution d'un matériau de chargement

(43) Veröffentlichungstag der Anmeldung: 21.04.2010
(73) Patentinhaber: Dow Global Technologies LLC, Midland, MI 48674 (US)
(72) Erfinder: Brackhagen, Meinolf, 29664 Walsrode (DE); Großstück, Marco, 29664 Walsrode (DE); Kowollik, Martin, 29683 Bad Fallingbostel (DE); Schlesiger, Hartwig, 51399 Burscheid (DE); Zillmann, Jan, 29683 Bad Fallingbostel (DE)
(74) Vertreter: f & e patent

(56) Entgegenhaltungen:
- EP-A- 1 445 278
- WO-A-2007/019963

## Beschreibung

Die vorliegende Erfindung betrifft ein Verfahren zum Verweilen und Verteilen eines Aufgabegutes. Insbesondere betrifft die vorliegende Erfindung ein Verfahren zur Herstellung einer wasserfeuchten Celluloseetherzusammensetzung. Die Erfindung betrifft ferner die durch ein solches Verfahren herstellbaren wasserfeuchten Celluloseetherzusammensetzungen, sowie entsprechende gemahlene und getrocknete Celluloseetherzusammensetzungen.

Celluloseether finden aufgrund ihrer hervorragenden Eigenschaften vielseitig Anwendung, beispielsweise als Verdicker, Kleber, Binde- und Dispergiermittel, Wasserrückhaltemittel, Schutzkolloide, Stabilisatoren, sowie als Suspendier-, Emulgier- und Filmbildemittel.

Es ist allgemein bekannt, dass Celluloseether durch alkalischen Aufschluss von Cellulose und anschließende Veretherung mit Veretherungsreagenzien wie beispielsweise Methylchlorid, Ethylchlorid, Ethylenoxid, Propylenoxid, oder Chloressigsäure hergestellt werden. Ein in technischen Anwendungen einsetzbares Produkt entsteht jedoch erst nach Wäsche, Verdichtung, Mahlung und Trocknung der nach der Reaktion erhaltenen rohen Cellulosederivate.

Die Verdichtung der oft in wattiger Form vorliegenden Celluloseether findet technisch sowohl durch mechanischen Energieeintrag als auch durch Zugabe von Wasser statt. Eine Kombination von mechanischem Energieeintrag und Wasserzugabe ist ebenso möglich.

Der mechanische Energieeintrag kann kontinuierlich oder diskontinuierlich, beispielsweise durch Granulierer, Kneter, Walzenstühle oder Pressen realisiert werden. In den allermeisten Fällen wird vor oder während des mechanischen Energieeintrages Wasser eingemischt, um den verdichtenden Effekt der mechanischen Kräfte zu verstärken. In vielen Fällen kann durch Zugabe erhöhter Mengen von Wasser der mechanische Energieeintrag abgesenkt werden. Darüber hinaus wird während des mechanischen Energieeintrages häufig gekühlt, beispielsweise über einen gekühlten Doppelmantel oder Leitung gekühlter Luft durch oder über das Gemisch. Auch kann das zuzugebende Wasser gekühlt werden oder ganz oder teilweise als Eis zugegeben werden. In den allermeisten Fällen entsteht so in modernen industriellen Herstellverfahren von Cellulosederivaten intermediär ein wasserfeuchtes Granulat, wasserfeuchte Klumpen oder eine wasserfeuchte Paste. Diese weisen abhängig vom Cellulosederivat, der Einwirkung mechanischer Kräfte und der Wasserzugabe variierende Konsistenzen, Partikelformen und Partikelgrößen auf. Diese wasserfeuchten Granulate, wasserfeuchten Klumpen und Pasten variierender Konsistenz, Partikelform und Partikelgröße werden im Folgenden zusammenfassend als "Aufgabegut" oder als "wasserfeuchte Celluloseetherzusammensetzung" bezeichnet.

Das Aufgabegut wird in anschließenden verfahrenstechnischen Schritten getrocknet und gemahlen. Die Mahlung und Trocknung kann hierbei schrittweise oder gleichzeitig durchgeführt werden. Somit wird das gewünschte getrocknete und zerkleinerte Cellulosederivatprodukt in Form eines Grieses, Pulvers oder feinen Pulvers erhalten.

Die heutigen Durchsätze einzelner moderner industrieller Anlagen zur Herstellung von Cellulosederivaten liegen im allgemeinen größer 500 kg / h fertiges Cellulosederivatprodukt. Selbst Durchsätze größer 1000 kg/h oder gar größer 2000 kg/h sind möglich.

Die Durchsätze an Aufgabegut können dann in Abhängigkeit der Aufgabegutfeuchte 5000 kg/h oder mehr betragen, z. B. für den Fall eines Durchsatzes von 1000 kg/h Cellulosederivat bei einer Feuchte von 80% bezogen auf die Gesamtmasse von Cellulosederivat und Wasser.

Für den Fall gleichen Durchsatzes von 1000 kg/h Cellulosederivat bei einer Feuchte von 50% bezogen auf die Gesamtmasse von Cellulosederivat und Wasser wird ein Aufgabegutstrom von nur noch 2000 kg/h erreicht.

Durch die unterschiedlichen Durchsätze (bedingt durch unterschiedliche Aufgabegutfeuchten) kann es notwendig werden, dass die Aufgabegutmengen zeitweise gepuffert werden müssen, da die Trocknungsleistung der nachgeschalteten Apparate aus wirtschaftlichen Gründen zumeist nicht auf den Spitzendurchsatz ausgelegt ist.

In Abhängigkeit des Wassergehaltes müssen auch unterschiedliche Verweilzeiten zur Aufnahme des Wassers zum Beispiel durch Diffusion bereit gestellt werden.

Darüber hinaus findet die Weiterverarbeitung des Aufgabegutes meist in mehreren parallelen Mühlen und/oder Trocknungsaggregaten statt.

Leider ist ein wasserfeuchte Cellulosederivate enthaltendes Aufgabegut in der Regel klebrig und klumpig und neigt stark zum Verbacken und zur Bildung sehr großer Klumpen sowie zum Kleben an Behälterwänden. Ein Fördern solcher Aufgabegute ist selbst unter Vermeidung von Verweilzeiten kaum möglich und nach Verweilzeiten von wenigen Minuten oft gar nicht mehr möglich, da die entstandenen Klumpen von einer Größe sind, die nicht mehr von Förderaggregaten wie Förderschnecken eingezogen und bewegt werden können.

Der Fachmann vermeidet daher Verweilzeiten oder setzt aufwändige, zwangsfördernde Aggregate (z.B. Extruder) oder Zerkleinerungseinrichtungen zur Zerkleinerung großer Klumpen (z.B. Zerhacker) ein, die zu einem hohen Energieaufwand und teilweise sogar zur Produktschädigung führen.

Ein solches recht aufwändiges Verfahren unter Einsatz von Knetern oder Extrudern ist beispielsweise aus der EP 1 127 895 bekannt.

Auch vermeidet der Fachmann bisher möglichst das Aufteilen eines Aufgabegutes hoher Aufgabegutfeuchte auf mehrere Mahl- oder Trocknungsstränge oder Mahltrocknungsstränge komplett, da durch die Klebrigkeit der Aufgabegute eine gleichmäßige Verteilung und gezielte Dosierung nicht möglich ist.

Der Einsatz von Hilfsmitteln zur Mahlung oder Trocknung oder Mahltrocknung ist ebenso gut bekannt. So werden beispielsweise in der WO 2006/120194 und der DE 196 01 763 Tenside als Hilfsmittel im Mahlungs- beziehungsweise Trocknungsschritt eingesetzt. Allerdings wird hier nicht beschrieben, in welcher Weise Tenside das Verweil- und Verteilverhalten eines Aufgabegutes beeinflussen.

In der DE 196 01 763 werden Tenside als Hilfsmittel bei der Herstellung hydrophiler, hochquellfähiger Polymerer eingesetzt. Als hydrophile hochquellfähige Polymere werden unter anderem Homo- und Co-Polymere auf Basis polymerisationsfähiger Säuren wie beispielsweise Acrylsäure, Methacrylsäure, Vinylsulfonsäure, oder Maleinsäure genannt.

Auch sind Tenside häufig ökologisch bedenklich und wirken reizend, so dass ihr Einsatz sowohl in Hinblick auf die Arbeitssicherheit als auch in Hinsicht auf Einsatz und Transport der Produkte kritisch ist.

Aufgabe der vorliegenden Erfindung war es daher ein ökonomisch vorteilhaftes und ökologisch und toxikologisch verbessertes Verfahren zum Verweilen und gegebenenfalls Verteilen eines Aufgabegutes zur Verfügung zu stellen, sowie entsprechende nach dem Verfahren hergestellte Celluloseetherzusammensetzungen. Eine bevorzugte Aufgabe der vorliegenden Erfindung war es, ein solches Verfahren unter Vermeidung von zerkleinernden Werzeugen, Knetern oder Extrudern zur Verfügung zu stellen.

Die vorliegende Erfindung betrifft ein Verfahren zum Verweilen und Verteilen wasserfeuchter Celluloseetherzusammensetzungen in Förderaggregaten , umfassend die Schritte:
a) Bereitstellen eines Ausgangsmaterials enthaltend einen wasserfeuchten Celluloseether oder ein Celluloseethergemisch mit einem Feuchtigkeitsgehalt von 25 bis 75 Gew.-% bezogen auf die Gesamtmasse des Ausgangsmaterials,
b) gegebenenfalls Zugabe und Einmischen von Wasser, und/oder gegebenenfalls Zugabe und Einmischen weiterer Additive (außer eines wasserlöslichen polymeren Additivs, welches anionische Gruppen enthält (WSAP)) zu dem Ausgangsmaterial, gekennzeichnet, durch den Schritt
c) Zugabe von 0,001 bis 2,0 Gew.-% WSAP oder eines WSAP-Gemisches bezogen auf die Trockenmasse der herzustellenden Celluloseetherzusammensetzung zu der in Schritt a) bzw. in den Schritten a) und b) erhaltenen Zusammensetzung,
   so dass eine wasserfeuchte Celluloseetherzusammensetzung erhalten wird, die einen Feuchtigkeitsgehalt von 45 bis 85 Gew.-% bezogen auf die Gesamtmasse der Celluloseetherzusammensetzung aufweist, wobei die wasserfeuchte Celluloseetherzusammensetzung auf mindestens zwei Mahl-, Trocknungs- oder Mahltrocknungsanlagen verteilt wird.

Überraschenderweise konnte nun gefunden werden, dass das erfindungsgemässe Verfahren sogar in langsam laufenden, nicht zwangsfördernden Apparaten ein verweil- und verteilbares Aufgabegut ergibt. Zwangsfördernde Aggregate oder Zerkleinerungseinrichtungen, d.h. zerkleinernde Werzeuge, Kneter oder Extruder, sind nicht mehr erforderlich.

Als ökonomische Vorteile sind hier unter anderem zu nennen:
o Geringer Energieaufwand,
o Hohe Verfügbarkeit z.B. durch Reduzierung von Stillstandszeiten zu Reinigungszwecken,
∘ Geringer apparativer Aufwand.

Als ökologische und toxikologische Vorteile sind hier unter anderem zu nennen:
o Vermeidung bedenklicher Additive, die unter manchen Umständen umweltgefährdend oder reizend wirken könnten,
o Vermeidung von Abwässern z.B. durch Reduzierung von Reinigungsabwässern.

Wie oben im einleitenden Teil erläutert, ist nun ein bevorzugter, wichtiger Aspekt der Erfindung, dass ein Verfahren zur Verteilung einer feuchten Celluloseetherzusammensetzung auf mindestens zwei, bevorzugt mindestens drei Mahl-, Trocknungs- oder Mahltrocknungsanlagen, vorzugsweise mittels Abzugsschnecken, zur Verfügung gestellt werden kann, welches dadurch gekennzeichnet ist, dass eine wasserfeuchte Celluloseetherzusammensetzung, in welcher WSAP oder ein WSAP-Gemisch inhomogen verteilt ist, verteilt wird.

In einer bevorzugten Ausführungsform dieses Verfahrens zur Verteilung wird eine wasserfeuchte Celluloseetherzusammensetzung verteilt, wie sie nach obigem und im Folgenden detailliert beschriebenen Verfahren hergestellt werden kann.

Das Verfahren zur Verteilung der feuchten Celluloseetherzusammensetzung ermöglicht, die Mahl- und Trocknungsleistung bei gegebener Anlagenkonfiguration einfach und mit geringen Investitionskosten erhöhen zu können.

Die feuchte Celluloseetherzusammensetzung zeichnet sich insbesondere dadurch aus, dass im Verfahren zur Verteilung der feuchten Celluloseetherzusammensetzung auf die Mahl-, Trocknungs- oder Mahltrocknungsanlagen im allgemeinen
- keine der Herstellung der feuchten Celluloseetherzusammensetzung nachgeschalteten Aggregate und/oder Werkzeuge zur Zerkleinerung großer Agglomerate und Klumpen benötigt werden;
   keine zwangsfördernden Aggregate benötigt werden;
   zur Verteilung der feuchten Celluloseetherzusammensetzung Verteilbehälter eingesetzt werden;
- zur Förderung der feuchten Celluloseetherzusammensetzung Einfachförderschnecken oder -schneckenkaskaden von geringer Antriebsleistung verwendet werden können und/oder
- ökologisch und toxikologisch bedenkliche Substanzen vermieden werden.

Werkzeuge zur Zerkleinerung von Klumpen und Agglomeraten sind beispielsweise sogenannte Messerköpfe, die typischerweise mit > 1000 U/min. betrieben werden. Verteilbehälter sind bevorzugt mit auflockenden Misch- und Räumwerkzeugen ausgerüstet. Die Mischwelle kann horizontal sowie vertikal angeordnet werden.

Das Rieselverhalten ist ausreichend, damit eine gleichzeitige Dosierung mittels mehrerer Abzugsschnecken, bevorzugt durch drei Abzugsschnecken realisiert werden kann. Alternativ kann eine Kaskade von Verteilbehältern installiert werden. Hierzu werden beispielsweise unterhalb eines Verweilbehälters mit zwei Abzugsschnecken zwei weitere Verteilbehälter mit je zwei Abzugsschnecken angeordnet.

Der Verteilbehälter kann gleichzeitig als Verweilbehälter ausgelegt werden. Als Verteilbehälter, der gleichzeitig als Verweilbehälter ausgelegt ist, werden vorzugsweise zylindrische Behälter mit langsam laufenden Mischwerkzeugen eingesetzt. Das Verhältnis der horizontalen Dimension des Behälters zur vertikalen Dimension des Behälters beträgt bevorzugt größer 1,5, besonders bevorzugt größer 2,0 und am meisten bevorzugt größer 2,5.

Bevorzugt werden zylindrische Behälter mit vertikal angeordneter Welle und flachem Boden eingesetzt. Die zylindrischen Behälter weisen vorzugsweise ein Auflockerungsorgan in Form eines mehrflügeligen / mehrstöckigen Rührwerkes auf. wie beispielsweise in der WO2007/090599 beschrieben. Besonders bevorzugt besitzt die zylindrischen Form eine schwach nach oben zulaufende Konizität, so dass der Behälter dem unteren Abschnitt eines Kegels entspricht. Bevorzugt werden Räum-/Auflockerungsorgane mit einem Entlastungskegel, besonders bevorzugt in Kombination mit einer schwach nach oben zulaufende Konizität eingesetzt. Solche Behälter mit Austragsvorrichtung sind beispielsweise bei der Fa. J. Engelsmann, Ludwigshafen erhältlich.

Bevorzugt werden die Funktionen Verweilen und Verteilen in einem Aggregat zusammengefasst. In diesem Fall findet die Verteilung bevorzugt auf zwei, besonders bevorzugt auf drei Mahl- oder Trocknungs- oder Mahltrocknungsstränge statt.

Als Celluloseether kommen bevorzugt Methylcellulosen, Hydroxyalkylcellulosen, Carboxymethylcellulosen und deren Derivate zum Einsatz.

Unter Methylcellulose werden im Rahmen dieser Erfindung alle methylgruppenhaltigen Celluloseether wie Methylcellulose (MC), Methylhydroxyethylcellulose (MHEC), Methyl-hydroxypropylcellulose (MHPC), Methylhydroxyethylhydroxypropylcellulose, Methyl-ethylhydroxyethylcellulose und Methylhydroxyethylhydroxybutylcellulose verstanden.

Unter Hydroxyalkylcellulosen werden im Rahmen dieser Erfindung alle hydroxyalkylgruppenhaltigen Celluloseether wie Hydroxyethylcellulose, Hydroxypropylcellulose, , Ethylhydroxyethylcellulose und hydrophob modifizierte Hydroxyethylcellulose verstanden.

Unter Carboxymethylcellulosen werden im Rahmen dieser Erfindung alle carboxymethylgruppenhaltigen Cellulosederivate wie Carboxymethylcellulose, hydrophob modifizerte Carboxymethylcellulose und Hydroxyethylcarboxymethylcellulose verstanden.

Der Grad der Alkylsubstitution eines Celluloseethers wird in der Regel durch den DS (degree of substitution, Substitutionsgrad) beschrieben. Der DS ist die mittlere Anzahl an substituierten OH-Gruppen pro Anhydroglucoseeinheit (AGU). Die Methylsubstitution wird beispielsweise als DS (Methyl) oder DS (M) angegeben.

Üblicherweise wird der Grad der Hydroxyalkylsubstitution durch den MS (molar substitution, molare Substitution) beschrieben. Der MS ist die mittlere Anzahl von Molen des Veretherungsreagenz, die pro Mol Anhydroglucoseeinheit etherartig gebunden sind. Die Veretherung mit dem Veretherungsreagenz Ethylenoxid wird beispielsweise als MS (Hydroxyethyl) oder MS (HE) angegeben. Die Veretherung mit dem Veretherungsreagenz Propylenoxid wird dementsprechend als MS (Hydroxypropyl) oder MS (HP) angegeben.

Die Bestimmung der Seitengruppen erfolgt anhand der Zeisel-Methode (Literatur: G. Bartelmus und R. Ketterer, Z. Anal. Chem. 286 (1977) 161-190).

Besonders bevorzugt werden Hydroxyalkylcellulosen oder Methylcellulose oder Methylhydroxyalkylcellulose eingesetzt. Am meisten bevorzugt sind Hydroxyethylcellulose, Methylhydroxyethylcellulose oder Methylhydroxypropylcellulose.

Im Falle der Methylhydroxyalkylcellulosen beträgt der DS (Methyl) bevorzugt 0,9 bis 3,0, besonders bevorzugt 1,1 bis 1,8 und insbesondere 1,3 bis 1,6. Der MS (Hydroxyalkyl) beträgt bevorzugt 0,05 bis 1, besonders bevorzugt 0,10 bis 0,7 und insbesondere 0,15 bis 0,35. Die Methylhydroxyalkylcellulosen haben die bevorzugtesten Bereiche des DS (Methyl) und des MS (Hydroxyalkyl) vorteilhafterweise in Kombination.

Im Falle der Hydroxyethylcellulosen beträgt der MS (Hydroxyethyl) im allgemeinen 1,5 bis 5,0, bevorzugt 2,0 bis 4,5, besonders bevorzugt 2,5 bis 4,0, am meisten bevorzugt 2,8 bis 3,7.

Im Anschluss an die Wäsche und Filtration weisen die Celluloseether, die typischerweise bei der Herstellung als wasserfeuchte Filterkuchen oder durch Behandlung alkoholfeuchter Filterkuchen erhalten und oben als "Ausgangsmaterial" bezeichnet werden, eine Feuchte von 25 bis 75 Gew.-% bezogen auf die Gesamtmasse des Ausgangsmaterials auf. Bevorzugt werden solche wasserfeuchten Celluloseether oder -gemische in Verfahrensschritt a) als Ausgangsmaterial für die nachfolgenden Verfahrensschritte eingesetzt, die eine Feuchte von 45 bis 65 Gew.-% besitzen. Diese Celluloseether können üblicherweise andere Bestandteilen, wie etwa NaCl sowie weitere Nebenprodukte aus der Herstellung, in einer Menge von bis zu 10 Gew.-% bezogen auf das trockene Ausgangsmaterial enthalten. Der Gehalt an reinem Celluloseether oder Celluloseethergemisch in dem Ausgangsmaterial kann daher in dem Bereich von 90 bis 100 Gew.-% bezogen auf das trockene Ausgangsmaterial liegen.

Von dem Ausgangsmaterial werden in Verfahrensschritt a) 88 bis 99,999 Gew.-% bezogen auf die Trockenmasse der herzustellenden inhomogenen Celluloseetherzusammensetzung bereitgestellt.

Gemäß dem erfindungsgemäßen Verfahren werden wasserfeuchte Celluloseether, wie sie beispielsweise nach der Wäsche roher Celluloseether vorliegen, gegebenenfalls unter Zugabe von Wasser unter Mischen auf eine für die folgenden Prozessschritte ideale Feuchte gebracht.

Die Zugabe von Wasser und das Einmischen des Wasser kann in Verfahrensschritt b) in Aggregaten gemäß dem Stand der Technik erfolgen. Hier können beispielsweise kontinuierlich arbeitende Granulierer der Firma Lödige Process Technology (Deutschland) mit und ohne Wehr oder kontinuierliche arbeitende Kneter z.B. der Firma List AG, Arisdorf, Schweiz oder schnellaufende Intensivmischer der Firma Hosokawa Micron BV, Doetinchem, Holland, die unter der Handelsmarke Firma Schugi vertrieben werden, oder gleich bzw. gegenläufige Doppelschneckenaggragate oder Bandmischer mit horizontal oder vertikal angeordneter Mischwelle und Werkzeugen eingesetzt werden.

Dem Fachmann ist bekannt, dass in diesem Anfeuchtungs- und Mischschritt b) Additive eingemischt werden können. Diese Additive werden in der Regel in einer Menge von 0,01 bis 10 Gew.-%, bevorzugt 0,1 bis 5 Gew.-%, besonders bevorzugt 0,2 bis 3 Gew.-% eingesetzt, jeweils bezogen auf die Trockenmasse der herzustellenden inhomogenen Celluloseetherzusammensetzung.

Als Additive sind hier beispielsweise Glyoxal und Puffersysteme zu nennen, wie sie in der EP 1 316 536 oder EP 1 452 544 beschrieben werden .

In der WO 2007/019963, EP 1 313 770 und DE 103 52 081 wird die homogene Additivierung mit vernetzten und nicht vernetzten polymeren Additiven beschrieben. Diese Additive werden zur Veränderung der Produkteigenschaften und anwendungstechnischen Eigenschaften eingesetzt und sollen im Aufgabegut und späteren Produkt ausreichend verteilt sein.

Additive in Schritt b) können sein: Oxidationsmittel wie Wasserstoffperoxid, Ozon, Hypohalogenide, Perborate oder Percarbonate; Dialdehyde wie Glyoxal und Glutyraldehyd, Salze wie Alkalimetallphosphate, -sulfate, -chloride; Puffersysteme wie Phosphat-, Citrat und Boratpuffer; Vernetzer wie polyfunktionelle Epoxide und polyfunktionelle Isocyanate; Konservierungsstoffe, Dispergiermittel, Entschäumer, Luftporenbildner, Pigmente, nichtionische, anionische und kationische Tenside.

Das so erhaltene Aufgabegut ist nach Einmischen des Wassers und eventueller Additive klumpig, oberflächlich feucht und klebrig und ist nur durch kontinuierliche Zerkleinerung mit schnellaufenden Mischwerkzeugen förderfähig zu halten. Eine Verteilung und Dosierung ist nicht möglich.

Überraschenderweise konnte nun gefunden werden, dass in einem Verfahrensschritt c) durch Zugabe wasserlöslicher polymerer Additive oder Additivgemische, die anionische Gruppen enthalten, das Aufgabegut derart positiv beeinflusst wird, dass das Verweilen und gegebenenfalls Verteilen in Verweil- und / oder Verteilbehältern ermöglicht wird. Wasserlösliche polymere Additive, die anionische Gruppen enthalten im Sinne dieser Erfindung werden im folgenden WSAP abgekürzt (Water Soluble Anionic Polymers).

Es können so mittlere Verweilzeiten von größer 5 Minuten, bevorzugt größer 8 Minuten am meisten bevorzugt zwischen 10 und 30 Minuten erreicht werden, ohne dass es zu einem Aufbau großer Klumpen kommt, die nicht mehr in Förderschnecken zu fördern sind.

Bevorzugt werden kontinuierlich arbeitende Verweil- und Verteilbehälter eingesetzt. In diesem Fall wird kontinuierlich Aufgabegut von oben in den Behälter gefördert, während am Boden des Behälters kontinuierlich verweiltes Aufgabegut beispielsweise durch Förderschnecken abgezogen wird.

Die Zugabe des WSAP kann sowohl vorgeschaltet zum Verweilbehälter geschehen, als auch im Verweilbehälter, bevorzugt wird die Zugabe kurz vor oder am Übergabepunkt durchgeführt.

Die Einsatzmenge an WSAP in Schritt c) beträgt 0,001 bis 2,0 Gew.-% bezogen auf die Trockenmasse der herzustellenden Celluloseetherzusammensetzung. Bevorzugt werden 0,1 bis 1,0 Gew.-% eingesetzt. Besonders bevorzugt werden 0,2 bis 0,8 Gew.-% eingesetzt. Am meisten bevorzugt werden 0,3 bis 0,6 Gew.% eingesetzt.

Das WSAP wird hierbei als wässrige Lösung oder in Pulverform zu gegeben. Bevorzugt wird das WSAP als wässrige Lösung zugegeben. Die WSAP-Konzentration der wässrigen Lösung beträgt hierbei in der Regel 0,5 bis 20 Gew.%, bezogen auf das Gesamtgewicht der Lösung. Bevorzugt beträgt die Konzentration 1 bis 10 Gew.%. Besonders bevorzugt beträgt die Konzentration 2 bis 7 Gew.%.

Die so in Schritt c) erhaltene wasserfeuchte Celluloseetherzusammensetzung weist eine Feuchte von 45 bis 85 %, bevorzugt 50 bis 80 %, besonders bevorzugt 55 bis 75 % und am meisten bevorzugt von 60 bis 72 %, bezogen auf die Gesamtmasse der inhomogenen wasserfeuchten Celluloseetherzusammensetzung auf.

Das WSAP oder das WSAP-Gemisch wird bevorzugt oberflächlich auf das Aufgabegut aufgetragen. Eine Einarbeitung des WSAP oder des WSAP-Gemisches in die Granulatteilchen bzw. Klumpen der feuchten Celluloseetherzusammensetzung ist unerwünscht. Beispiele für ungeeignete Aggregate, die das WSAP oder das WSAP-Gemisch in die Granulatteilchen bzw. Klumpen der feuchten Celluloseetherzusammensetzung unerwünscht einarbeiten könnten, sind Kneter und Extruder.

Vorteilhaft verwendet werden können dagegen beispielsweise Wurfmischer oder Bandmischer. Bevorzugt werden Wurfmischer verwendet. Das Mischorgan kann Messerköpfe enthalten, um beispielsweise schon vor der WSAP-Zugabe vorhandene Verklumpungen aufzubrechen, falls erforderlich.

Als WSAP werden beispielsweise wasserlösliche Homo- und Copolymere auf der Basis von Maleinsäure, Acrylsäure und Methacrylsäure, Vinylsulfonsäure, Vinylphosphonsäure, Styrolsulfonsäure, 2-(Methy)acrylamid-2-methylpropansulfonsäure, 2-(Methy)acryloylethansulfonsäure, 2-(Methy)acryloylpropansulfonsäure, sowie deren Salze und Ester eingesetzt. Beispielsweise können Copolymere der genannten Säuren mit folgenden Monomeren eingesetzt werden: Acrylamid, Vinylacetat und Vinylakohol. Beispiele hierfür sind: Polyacrylate, teilverseifte Polyacrylamide, Acrylamid-Acrylsäure Copolymere, Polyasparaginsäure, sowie Acrylsäure-Methycrylsäureester Copolymere.

Überraschenderweise können Polymere als Additive eingesetzt werden, die gemäß der DE 196 01 763 bei ihrer Herstellung selbst der Additiverung bedürfen. Bevorzugt werden anionische Polyacrylamide mit einem Acrylatgehalt, insbesondere mit einem Natriumacrylatgehalt von kleiner als 20 Gew.-% und einer Viskosität (1 Gew.-%ig in 10 Gew.-%iger Kochsalzlösung, 25°C, gemessen mit einem Brookfield-Viskosimeter) von kleiner als 1000 mPas eingesetzt.

Gegebenenfalls werden in Schritt c) weitere Komponenten zugegeben. Unter anderem sind hier pulverförmige Cellulosederivate zu nennen, die in dem sich gegebenenfalls anschließenden und unten beschriebenen Verfahren zur Herstellung einer gemahlenen und getrockneten Celluloseetherzusammensetzung nach Siebung oder Sichtung erhalten werden. Beispielsweise können auf diese Art Pulveranteile, die noch nicht die für die Anwendung notwendige Partikelgröße aufweisen in den Prozess zurückgeführt werden.

In einer bevorzugten Ausführungsform des erfindungsgemäßen Verfahrens wird zu keinem Zeitpunkt Stärke, Stärkeether, Guar, Guarether und Xanthan, zumindest jedenfalls nicht in einer Menge von 0,1 bis 10 Gew.-% bezogen auf den trockenen Celluloseether oder Celluloseethergemisch, zu dem wasserfeuchten Celluloseether bzw. Celluloseethergemisch oder der inhomogenen wasserfeuchten Celluloseetherzusammensetzung zugegeben.

In dem sich üblicherweise anschließenden Verfahren zur Herstellung einer gemahlenen und getrockneten Celluloseetherzusammensetzung wird die WSAPenthaltende wasserfeuchte Celluloseetherzusammensetzung getrocknet und gemahlen, wobei die Mahlung und Trocknung auch in einem Schritt stattfinden kann (Mahltrocknung). Die Trocknung und Mahlung oder Mahltrocknung wird hierbei nach Methoden gemäß dem Stand der Technik durchgeführt. Bevorzugt wird die Mahlung und Trocknung kombiniert in einem Schritt durchgeführt. Gegebenenfalls können sich weitere Mahlungsschritte gemäß dem Stand der Technik anschließen, um eine weitere Zerkleinerung der Produkte zu erreichen.

Nach dem oben beschriebenen erfindungsgemäßen Verfahren erhält man eine wasserfeuchte Celluloseetherzusammensetzung, enthaltend
a) 15 bis 55 Gew.-%, bevorzugt 20 bis 50 Gew.-%, weiter bevorzugt 25 bis 45 Gew.-%, einer Trockenmasse enthaltend
   i) 79,2 bis 99,999 Gew.-% eines Celluloseethers oder eines Celluloseethergemisches bezogen auf die Trockenmasse der Celluloseetherzusammensetzung,
   ii) 0,001 bis 2,0 Gew.-%, bevorzugt 0,1 bis 1,0 Gew.-%, weiter bevorzugt 0,2 bis 0,8 Gew.-%, eines wasserlöslichen polymeren und anionische Gruppen enthaltenden Additivs oder Additivgemisches (WSAP) bezogen auf die Trockenmasse der Celluloseetherzusammensetzung,
   iii) gegebenenfalls bis 10 Gew.-%, bevorzugt 0,1 bis 5 Gew.-%, besonders bevorzugt 0,2 bis 3 Gew.-%, weitere Additive bezogen auf die Trockenmasse der Celluloseetherzusammensetzung,
   iv)gegebenenfalls bis 8,8 Gew.-% andere Bestandteile bezogen auf die Trockenmasse der Celluloseetherzusammensetzung, und
b) 45 bis 85 Gew.-%, bevorzugt 50 bis 80 Gew.-%, weiter bevorzugt 55 bis 75 Gew.-%, Wasser,
dadurch gekennzeichnet, dass das WSAP oder WSAP-Gemisch inhomogen in der wasserfeuchten Celluloseetherzusammensetzung verteilt ist, nämlich überwiegend zwischen den Granulatteilchen und/oder Klumpen der inhomogenen wasserfeuchten Celluloseetherzusammensetzung oder auf deren jeweiliger Oberfläche.

In einer bevorzugten Ausführungsform sind in der erfindungsgemäßen wasserfeuchten Zusammensetzung weniger als 50 %, bevorzugt weniger als 40 %, weiter bevorzugt weniger als 30 % der in der Zusammensetzung enthaltenen WSAP innerhalb der Granulatteilchen und/oder Klumpen enthalten. Ob sich WSAP innerhalb der Teilchen befindet, kann an Querschnitten durch Partikel festgestellt werden. Schnitte von etwa 10-1000 nm Dicke können beispielsweise nach der Einbettung in ein Epoxidharz mittels Mikrotom, beispielsweise Ultra Cut E (Fa. Reichert-Jung) hergestellt werden. Der Fachmann kann durch einfache Versuch geeignete Präparationsbedingungen finden.

Die Verteilung des WSAP oder WSAP-Gemisches kann beispielsweise mittels TEM-EDX oder TEM-EELS festgestellt werden, wenn Fremdatome wie beispielsweise Stickstoff im WSAP vorhanden sind (TEM = Transmissionselektronenmikroskopie; EDX = energy dispersive X-ray spectroscopy; EELS = electron energy loss spectroscopy).

Weiterhin können dünne Schnitte von nach dem Stand der Technik eingebetteten Partikeln mit einem kationisch geladenen Fluoreszensmarker angefärbt werden. Die Verteilung der kationischen Fluoreszenzmarker, beispielsweise Propidiniumbromid (Fa. Invitrogen), spiegelt die Verteilung der WSAP wieder und kann mittels Fluoreszenz-Spektroskopie nachgewiesen werden. Die Bedingungen der Anfärbung müssen so gewählt sein, dass sich das WSAP und die übrigen Bestandteile des Partikels nicht lösen.

Eine bevorzugte Methode stellt die Sekundärionen-Massenspektrometrie dar. Dabei wird ein Primärstrahl (O₂+, O-, Ar+ oder Cs+) mit minimal etwa 2 um Durchmesser fokussiert auf die Probe gerichtet. Die entstehenden Sekundärionen geben eine ortsaufgelöste Information der Zusammensetzung in dem untersuchten Bereich. Das Abtragen der Oberflächenschicht durch den Primärstrahl ergibt ein Tiefenprofil, ohne dass eine aufwändige Probenpräparation zur Herstellung von Dünnschnitten erforderlich ist.

Die so erhaltenen Celluloseetherprodukte finden bevorzugt Einsatz als Additive in Fliesenklebern, Putzen wie Zement- oder Gipsputz, Spachtelmassen, Dispersionssystemen wie Dispersionsfarben oder Dispersionsklebern, in zementären Systemen, die extrudiert werden, und anderen Baustoffen.

Um die Celluloseetherprodukte für einen Einsatz in spezifischen Baustoffsystemen anzupassen kann gegebenenfalls eine weitere Additivierung mit pulverförmigen Additiven durchgeführt werden, wie sie beispielsweise in der US-A 4 654 085 beschrieben ist.

### Beispiele

Soweit nicht anders angegeben, wurden die angegebenen Viskositäten der Methylhydroxyethylcellulosen und Methylhydroxypropylcellulosen an Lösungen der trockenen Celluloseether in Wasser bei 20°C und einem Schergefälle von 2,55 s⁻¹ gemessen (Meßgerät: Haake Rotovisko VT 550).

### Beispiel 1 (Vergleich)

In einem Bandmischer mit horizontaler Welle und 5 Liter Rauminhalt werden 2,66 kg einer wasserfeuchten MHEC (Wassergehalt 64 Gew.-%, Viskosität einer 2 Gew.-% igen Lösung 40000 mPa*s, DS(Methyl) 1,35 - 1,40, MS(Hydroxyethyl) 0,15-0,20) mit Wasser auf einen Wassergehalt von 75,5 Gew.-% angefeuchtet und 10 Minuten gerührt.

Das Produkt wird in einen Mischer mit vertikaler Mischwelle und langsam drehenden Mahlwerkzeugen überführt und weitere 20 Minuten gerührt. Die Verweilbarkeit wird anhand des Produktanteils beurteilt, der an der Wand haftet. Die Verteilbarkeit wird anhand der Größe der Granulatteilchen sowie der Oberflächenbeschaffenheit beurteilt.

### Beispiel 2 (Erfindung)

In einem weiteren Versuch (Versuch 2) wird nach 9 Minuten Rühren analog zu Versuch 1 im Mischer mit horizontaler Mischwelle eine 3,5 Gew.-% Lösung von Polyacrylamid (PAAm) mit einer Viskosität von 18060 mPa*s bei einer Schergeschwindigkeit von 2,55 s⁻¹ (Haake Rotovisko) eingesetzt, welches einen Anionenanteil von ca. 5 % aufweist. Die Menge an eingesetztem Polyacrylamid bezogen auf den trockenen Celluloseether beträgt 0,4 Gew.-% bezogen auf die Trockenmasse der herzustellenden Celluloseetherzusammensetzung. Auch das Produkt aus Versuch 2 wird über 20 Minuten in dem Verweilbehälter aus Versuch 1 bei derselben Drehzahl gerührt.

**Tabelle 1**

| | Versuch 1 (Vergleich) | Versuch 2 (Erfindung) |
|---|---|---|
| Polyacrylamid, Gew.-% bezogen auf trockenen Celluloseether | 0 | 0,4 (Zugabe 9 min.) |
| Austrag aus Mischer 1 (nach 10 Minuten Mischzeit) | Schwierig, 6 große Klumpen, 3 davon haften an der Wand und am Mischwerkzeug | Bis PAAm Zugabe analog Versuch 1, danach zerfallen die großen Klumpen in mehrere, mit PAAm-Lösung benetzte Klumpen, die nicht mehr an der Wand haften. |
| Austrag aus dem Verweilbehälter (nach 20 Minuten Verweilzeit) | Viele klebrige mittelgroße Klumpen, die zum Teil agglomerieren und an der Wand haften. | Es klebt kaum Produkt an der Wandung, deutlich weniger als in Versuch 1. Es sind mittelgroße Klumpen entstanden, die oberflächlich nicht klebrig sind und nicht zur Agglomeration neigen. |

### Beispiel 3 (Vergleich)

In Beispiel 3 wird eine wasserfeuchte MHEC Filterware mit einem Feuchtegehalt von 56,09 Gew.-% eingesetzt (Viskosität einer 2 Gew.-% igen Lösung 9150 mPa*s, DS(Methyl) 1,79, MS(Hydroxyethyl) 0,14). Die MHEC wird in einem Mischer mit horizontaler Welle mit Wasser vermischt und auf einen Wassergehalt von 69,23 Gew.-% angefeuchtet. Nachdem das Wasser zugegeben wurde, wird 10 Minuten gemischt.

Der feuchte Celluloseether wird nun in einen Mischer mit vertikal angeordneter Mischwelle und langsam drehenden Mahlwerkzeugen überführt. Es wird beurteilt, wie sich der Celluloseether nach weiteren 10 Minuten Verweilzeit in dem Aggregat mit vertikaler Mischwelle (Verweilbehälter) austragen lässt oder ob der Produktaustrag durch Kleben an der Wandung behindert ist. Weiterhin wird gemessen, welcher Anteil des Produktes ein Lochblech mit Öffnungen von 1 cm passiert, nachdem das Produkt getrocknet wurde.

### Beispiel 4

Es wird analog Beispiel 3 verfahren, wobei im Mischer mit horizontaler Mischwelle unmittelbar nach dem Wasser eine 5,85 Gew.-%ige Lösung des in Beispiel 2 verwendeten Polyacrylamides zugegeben wird. Die Menge des Polyacrylamides beträgt 0,4 Gew.-% bezogen auf die Trockenmasse der herzustellenden Celluloseether-zusammensetzung.

### Beispiel 5

Analog Beispiel 4, wobei die Polyacrylamidlösung nach 9 Minuten Mischzeit zugegeben wird.

### Beispiele 6 bzw. 7

Analog Beispielen 4 bzw. 5, jedoch wird eine Polyacrylamid-Lösung von 3,5 Gew.-% verwendet.

| Versuch | Wassergehalt, Gew.-%* | Polyacrylamid, Gew.-%* | Zugabezeitpunkt PAAm, nach min. | Kleben an der Wandung | Passage durch 1 cm Lochblech **, Gew.-% |
|---|---|---|---|---|---|
| 3 | 69,23 | 0 | - | ja | 60 |
| 4 | 69,23 | 0,4 | 0 | nein | 88 |
| 5 | 69,23 | 0,4 | 9 | kaum | 70 |
| 6 | 69,23 | 0,4 | 0 | kaum | 70 |
| 7 | 69,23 | 0,4 | 9 | kaum | 65 |

| | | | | | |
|---|---|---|---|---|---|
| * bezogen auf die Trockenmase der herzustellenden Celluloseetherzusammensetzung ** bei Austrag aus dem Verweilbehälter (nach 10 Minuten Verweilzeit) und anschließender Trocknung, das Lochblech hat quadratische Ausstanzungen mit 1 cm Kantenlänge. | | | | | |

### Beispiele 8 (Vergleich)

In Beispiel 8 wird analog Beispiel 3 verfahren, wobei eine andere Ausgangsware eingesetzt wird. Es handelt sich um eine wasserfeuchte MHEC Filterware mit einem Feuchtegehalt von 61,79 Gew.-% eingesetzt (Viskosität einer 2 Gew.-% igen Lösung 35-45000 mPa*s, DS(Methyl) 1,35-1,40, MS(Hydroxyethyl) 0,13-0,20). Die MHEC wird in einem Mischer mit horizontaler Welle mit Wasser vermischt und auf einen Wassergehalt von 69,23 Gew.-% angefeuchtet. Nachdem das Wasser zugegeben wurde, wird 10 Minuten gemischt. Es wird beurteilt, ob Produkt an Wandungen und Welle haftet.

Der feuchte Celluloseether wird nun in einen Mischer mit vertikal angeordneter Mischwelle und langsam drehenden Mahlwerkzeugen überführt. Es wird beurteilt, wie sich der Celluloseether nach weiteren 10 Minuten Verweilzeit in dem Aggregat mit vertikaler Mischwelle (Verweilbehälter) austragen lässt oder ob der Produktaustrag durch Kleben an der Wandung behindert ist. Weiterhin wird gemessen, welcher Anteil des Produktes ein Lochblech mit Öffnungen von 1 cm passiert (im Unterschied zu Beispiel 3 wurde an der Feuchtware gemessen).

### Beispiel 9

Es wird analog Beispiel 8 verfahren, wobei im Mischer mit horizontaler Mischwelle unmittelbar nach dem Wasser eine 5,5 Gew.-%ige Lösung des in Beispiel 2 verwendeten Polyacrylamides zugegeben wird. Die Menge des Polyacrylamides beträgt 0,4 Gew.-% bezogen auf die Trockenmasse der herzustellenden Celluloseetherzusammensetzung.

### Beispiel 10

Analog Beispiel 9, wobei die Polyacrylamidlösung nach 9 Minuten Mischzeit zugegeben wird.

### Beispiele 11 bzw. 12

Analog Beispielen 9 bzw. 10, jedoch wird eine Polyacrylamid-Lösung von 3,5 Gew.-% verwendet.

| Versuch | Wassergehalt, Gew.-%* | Polyacrylamid, Gew.-%* | Zugabezeitpunkt PAAm, nach min. | Kleben im Mischer (beim Austrag) | Kleben im Verweilbehälter (beim Austrag) | Passage durch 1 cm Lochblech **, Gew.-% |
|---|---|---|---|---|---|---|
| 8 | 69,23 | 0 | - | Ja Wand, Welle | nein | 15 |
| 9 | 69,23 | 0,4 | 0 | Ja Wand | ja | 33 |
| 10 | 69,23 | 0,4 | 9 | Nein | Nein | 5 |
| 11 | 69,23 | 0,4 | 0 | Ja Wand | ja | 51 |
| 12 | 69,23 | 0,4 | 9 | nein | nein | 4 |

| | | | | | | |
|---|---|---|---|---|---|---|
| * bezogen auf die Trockenmase der herzustellenden Celluloseetherzusammensetzung, ** bei Austrag aus dem Verweilbehälter (nach 10 Minuten Verweilzeit), das Lochblech hat quadratische Ausstanzungen mit 1 cm Kantenlänge | | | | | | |

## Patentansprüche

1. Verfahren zum Verweilen und Verteilen wasserfeuchter Celluloseetherzusammensetzungen in Förderaggregaten , umfassend die Schritte:
a) Bereitstellen eines Ausgangsmaterials enthaltend einen wasserfeuchten Celluloseether oder ein Celluloseethergemisch mit einem Feuchtigkeitsgehalt von 25 bis 75 Gew.-% bezogen auf die Gesamtmasse des Ausgangsmaterials,
b) gegebenenfalls Zugabe und Einmischen von Wasser, und/oder gegebenenfalls Zugabe und Einmischen weiterer Additive (außer eines wasserlöslichen polymeren Additivs, welches anionische Gruppen enthält (WSAP)) zu dem Ausgangsmaterial,
**gekennzeichnet, durch** den Schritt
c) Zugabe von 0,001 bis 2,0 Gew.-% WSAP oder eines WSAP-Gemisches bezogen auf die Trockenmasse der herzustellenden Celluloseetherzusammensetzung zu der in Schritt a) bzw. in den Schritten a) und b) erhaltenen Zusammensetzung,
so dass eine wasserfeuchte Celluloseetherzusammensetzung erhalten wird, die einen Feuchtigkeitsgehalt von 45 bis 85 Gew.-% bezogen auf die Gesamtmasse der Celluloseetherzusammensetzung aufweist, wobei die wasserfeuchte Celluloseetherzusammensetzung auf mindestens zwei Mahl-, Trocknungs- oder Mahltrocknungsanlagen verteilt wird.

2. Verfahren nach Anspruch 1, wobei in Schritt c) das WSAP oder das WSAP-Gemisch als wässrige Lösung oder in Pulverform zugegeben wird.

3. Verfahren nach Anspruch 2, wobei in Schritt c) das WSAP oder das WSAP-Gemisch unter Ausschluss zerkleinernder Werkzeuge, Knetern oder Extrudern als wässrige Lösung oder in Pulverform zugegeben wird, so dass eine Einmischung der WSAP in die Granulatteilchen und/oder Klumpen der Celluloseetherzusammensetzung vermieden wird.

4. Verfahren nach einem der Ansprüche 1 bis 3, **dadurch gekennzeichnet, dass** das WSAP oder WSAP-Gemisch inhomogen in der wasserfeuchten Celluloseetherzusammensetzung verteilt ist, nämlich überwiegend zwischen den Granulatteilchen und/oder Klumpen der wasserfeuchten Celluloseetherzusammensetzung oder auf deren jeweiliger Oberfläche, wobei weniger als 50 % der in der Zusammensetzung enthaltenen WSAP innerhalb der Granulatteilchen und/oder Klumpen enthalten sind.

5. Verfahren nach einem der Ansprüche 1 bis 4, wobei Stärke, Stärkeether, Guar, Guarether und Xanthan nicht in einer Menge von 0,1 bis 10 Gew.-% bezogen auf den trockenen Celluloseether oder Celluloseethergemisch zugegeben werden.

6. Verfahren nach einem der Ansprüche 1 bis 5, wobei folgende weitere Schritte vorgesehen sind:
d) Trocknen der wasserfeuchten Celluloseetherzusammensetzung,
e) anschließendes Mahlen, wobei die Schritte d) und e) auch alternativ als Mahltrocknung in einem Schritt stattfinden können, und
f) gegebenenfalls weitere Mahlungsschritte.

7. Verwendung eines wasserlöslichen polymeren Additivs, welches anionische Gruppen enthält (WSAP), oder eines entsprechenden Additivgemischs, zur Verbesserung der Förderfähigkeit einer wasserfeuchten Celluloseetherzusammensetzung in einem Förderaggregat.

8. Verwendung nach Anspruch 7, zur Verbesserung der Förderfähigkeit einer wasserfeuchten Celluloseetherzusammensetzung in einer Förderschnecke.

9. Verwendung nach Anspruch 7 oder 8, wobei das oder die WSAP ausgewählt sind aus der Gruppe, die wasserlösliche Homo- und Copolymere auf der Basis von Maleinsäure, Acrylsäure, Methacrylsäure, Vinylsulfonsäure, Vinylphosphonsäure, Styrolsulfonsäure, 2-(Methy)acrylamid-2-methylpropansulfonsäure, 2-(Methy)acryloylethansulfon-säure, 2-(Methy)acryloylpropansulfonsäure, sowie deren Salze und Ester umfasst, inklusive Copolymere der genannten Säuren mit Monomeren aus der Gruppe die Acrylamid, Vinylacetat und Vinylakohol umfasst.

10. Verwendung nach einem der Ansprüche 7 bis 9, wobei das WSAP ein anionisches Polyacrylamid mit einem Acrylatgehalt von kleiner als 20 Gew.-% ist und eine Viskosität von kleiner als 1000 mPas, gemessen bei einer Konzentration von 1 Gew.% in 10 Gew.-%iger Kochsalzlösung bei 25°C aufweist.

11. Verwendung nach einem der Ansprüche 7 bis 10, wobei das oder die Celluloseetherderivate ausgewählt sind aus der Gruppe die Methylcellulosen, Hydroxyalkylcellulosen, Carboxymethylcellulosen und deren Derivate umfasst.

12. Verwendung nach einem der Ansprüche 7 bis 11, wobei Stärke, Stärkeether, Guar, Guarether und Xanthan nicht in der wasserfeuchten Zusammensetzung enthalten sind.

## Claims

1. A process for hold-up and distribution of water-moist cellulose ether compositions in conveying units, comprising the steps:
a) provision of a starting material comprising a water-moist cellulose ether or a cellulose ether mixture having a moisture content of from 25 to 75% by weight, based on the total mass of the starting material,
b) optionally addition and mixing in of water and/or optionally addition and mixing in of further additives (except for a water-soluble polymeric additive which contain anionic groups (WSAP)) to the starting material, **characterized by** the step
c) addition of from 0.001 to 2.0% by weight of WSAP or of a WSAP mixture, based on the dry mass of the cellulose ether composition to be prepared, to the composition obtained in step a) or in steps a) and b),
so that a water-moist cellulose ether composition is obtained which has a moisture content of from 45 to 85% by weight, based on the total mass of the cellulose ether composition, whereby the water-moist cellulose ether composition is distributed over at least two milling, drying or combined milling/drying plants.

2. The process according to claim 1, wherein the WSAP or the WSAP mixture is added as an aqueous solution or in powder form in step c).

3. The process according to claim 2, wherein the WSAP or the WSAP mixture is added as an aqueous solution or in powder form in step c), with exclusion of comminuting tools, kneaders or extruders, so that mixing of the WSAP into the granular particles and/or lumps of the cellulose ether composition is avoided.

4. The process according to any of claims 1 to 3, **characterized in that** the WSAP or WSAP mixture is distributed inhomogeneously in the water-moist cellulose ether composition, namely predominantly between the granular particles and/or lumps of the water-moist cellulose ether composition or on the respective surface thereof, with less than 50% of the WSAP present in the composition being present within the granular particles and/or lumps.

5. The process according to any of claims 1 to 4, wherein starch, starch ether, guar, guar ether and xanthan are not added in an amount of from 0.1 to 10% by weight, based on the dry cellulose ether or cellulose ether mixture.

6. A process according to any of claims 1 to 5 comprising the further steps of
d) drying the water-moist cellulose ether composition,
e) then milling, or combining steps d) and e) to take place in one step as combined milling/drying, and
f) optionally further milling steps.

7. The use of a water-soluble polymeric additive which contains anionic groups (WSAP), or a corresponding additive mixture, for improving the transportability of a water-moist cellulose ether composition in a conveying unit.

8. The use according to claim 7 for improving the transportability of a water-moist cellulose ether composition in a conveying screw.

9. The use according to claim 7 or 8, wherein the WSAP or WSAPs are selected from the group consisting of water-soluble homo- and copolymers based on maleic acid, acrylic acid, methacrylic acid, vinylsulfonic acid, vinylphosphonic acid, styrenesulfonic acid, 2-(methy)acrylamide-2-methylpropanesulfonic acid, 2-(methy)acryloylethanesulfonic acid, 2-(methy)acryloylpropanesulfonic acid and the salts and esters thereof, including copolymers of said acids with monomers from the group consisting of acrylamide, vinyl acetate and vinyl alcohol.

10. The use according to any of claims 7 to 9, wherein the WSAP is an anionic polyacrylamide having an acrylate content of less than 20% by weight and has a viscosity of less than 1000 mPa·s, measured at a concentration of 1% by weight in 10% strength by weight sodium chloride solution at 25° C.

11. The use according to any of claims 7 to 10, wherein the cellulose ether derivative or derivatives are selected from the group consisting of methylcelluloses, hydroxyalkylcelluloses, carboxymethylcelluloses and derivatives thereof.

12. The use according to any of claims 7 to 11, wherein starch, starch ether, guar, guar ether and xanthan are not present in the water-moist cellulose ether composition.

## Revendications

1. Procédé pour le stockage et la distribution de compositions d'éther de cellulose humidifiées à l'eau dans des unités de transport, comportant les étapes :
a) de préparation d'une matière première contenant un éther de cellulose humidifié à l'eau ou un mélange d'éthers de cellulose ayant une teneur en humidité de 25 à 75 % en poids rapporté à la masse totale de la matière première,
b) éventuellement d'ajout et d'incorporation d'eau, et/ou éventuellement d'ajout et d'incorporation d'additifs supplémentaires (à l'exception d'un additif polymère hydrosoluble qui contient des groupes anioniques (WSAP)) à la matière première,
**caractérisé par** l'étape
c) d'ajout de 0,001 à 2,0 % en poids de WSAP ou d'un mélange de WSAP rapporté à la masse sèche de la composition d'éther de cellulose à produire à la composition obtenue dans l'étape a) ou dans les étapes a) et b),
de sorte qu'il soit obtenu une composition d'éther de cellulose humidifiée à l'eau qui possède une teneur en humidité de 45 à 85 % en poids rapporté à la masse totale de la composition d'éther de cellulose, la composition d'éther de cellulose humidifiée à l'eau étant distribuée sur au moins deux installations de broyage, de séchage ou de séchage par broyage.

2. Procédé selon la revendication 1, dans lequel dans l'étape c), le WSAP ou le mélange de WSAP est ajouté sous forme de solution aqueuse ou sous forme de poudre.

3. Procédé selon la revendication 2, dans lequel dans l'étape c), le WSAP ou le mélange de WSAP est ajouté sous forme de solution aqueuse ou sous forme de poudre, en excluant les outils de concassage, les malaxeurs ou les extrudeuses, de sorte à éviter une incorporation des WSAP dans les particules granulaires et/ou grumeaux de la composition d'éther de cellulose.

4. Procédé selon l'une des revendications 1 à 3, **caractérisé en ce que** le WSAP ou le mélange de WSAP est distribué de manière inhomogène dans la composition d'éther de cellulose humidifiée à l'eau, à savoir principalement entre les particules granulaires et/ou grumeaux de la composition d'éther de cellulose humidifiée à l'eau ou sur leur surface respective, dans lequel moins de 50 % des WSAP contenus dans la composition sont contenus à l'intérieur des particules granulaires et/ou grumeaux.

5. Procédé selon l'une des revendications 1 à 4, dans lequel de l'amidon, un éther d'amidon, du guar, un éther de guar et du xanthane ne sont pas ajoutés dans une quantité de 0,1 à 10 % en poids rapporté à l'éther de cellulose ou mélange d'éthers de cellulose sec.

6. Procédé selon l'une des revendications 1 à 5, dans lequel les étapes supplémentaires suivantes sont prévues :
d) séchage de la composition d'éther de cellulose humidifiée à l'eau,
e) broyage subséquent, dans lequel les étapes d) et e) peuvent également avoir lieu en variante sous forme de séchage par broyage en une étape, et
f) éventuellement des étapes de broyage supplémentaires.

7. Utilisation d'un additif polymère hydrosoluble contenant des groupes anioniques (WSAP), ou d'un mélange d'additifs correspondant, pour améliorer la transportabilité d'une composition d'éther de cellulose humidifiée à l'eau dans une unité de transport.

8. Utilisation selon la revendication 7 pour améliorer la transportabilité d'une composition d'éther de cellulose humidifiée à l'eau dans une vis sans fin.

9. Utilisation selon la revendication 7 ou la revendication 8, dans laquelle le ou les WSAP sont sélectionnés dans le groupe comportant des homo- et copolymères hydrosolubles à base d'acide maléique, d'acide acrylique, d'acide méthacrylique, d'acide vinylsulfonique, d'acide vinylphosphonique, d'acide styrène sulfonique, d'acide 2-(méthyl)acrylamide-2-méthylpropane sulfonique, d'acide 2-(méthyl)acryloyléthane sulfonique, d'acide 2-(méthyl)acryloylpropane sulfonique, ainsi que de leurs sels et esters, y compris des copolymères des acides cités avec des monomères issus du groupe qui comporte l'acrylamide, l'acétate de vinyle et l'alcool vinylique.

10. Utilisation selon l'une des revendications 7 à 9, dans laquelle le WSAP est un polyacrylamide anionique ayant une teneur en acrylate de moins de 20 % en poids et possède une viscosité de moins de 1 000 mPas, mesurée à une concentration de 1 % en poids dans une solution de sérum physiologique à 10 % en poids à 25 °C.

11. Utilisation selon l'une des revendications 7 à 10, dans laquelle le ou les dérivés d'éther de cellulose sont sélectionnés dans le groupe comportant des méthylcelluloses, des hydroxyalkylcelluloses, des carboxyméthylcelluloses et leurs dérivés.

12. Utilisation selon l'une des revendications 7 à 11, dans laquelle la composition humidifiée à l'eau ne contient pas d'amidon, d'éther d'amidon, de guar, d'éther de guar ou de xanthane.
